# DEMANDE DE BREVET EUROPEEN

(11) **EP 2 267 323 A2**
(43) Date de publication de la demande: **29.12.2010**
(21) Numéro de dépôt: 10290335.8
(22) Date de dépôt: 21.06.2010
(51) Int. Cl.: F16C 19/00, B60B 27/00

(54) **Palier à roulement**

(30) Priorité: 26.06.2009 FR 0903145
(71) Demandeur: SNR Roulements, 74000 Annecy (FR)
(72) Inventeur: Berthier, Julien, 74410 Saint Jorioz (FR); Burnet, Cédric, 74000 Annecy (FR); Tsen, Cynthia, 73100 Mouxy (FR); Poncet, Frédéric, 74290 Menthon Saint Bernard (FR)
(74) Mandataire: Sayettat, Julien Christian

(57) **Abrégé**

L'invention concerne un palier à roulement comprenant un organe fixe, un organe tournant et au moins une rangée de corps roulants, au moins l'un desdits organes présentant une surface circonférentielle (1) de révolution autour d'un axe (2) et, s'étendant depuis ladite surface, au moins une patte (3) de solidarisation dudit organe à une structure, ladite patte présentant une interface (4) de raccordement avec la surface circonférentielle (1) et un orifice (5) de fixation traversant de part et d'autre ladite patte entre une ouverture externe (5a) et une ouverture interne (5b) débouchant respectivement dans un pian externe (E) et dans un plan interne (I), la patte (3) comprenant une face interne (3b) présentant un évidement (7) ayant un fond (8) qui s'étend depuis l'interface (4) vers l'orifice (5) de fixation en présentant une zone extérieure (8a) qui est contenue dans le plan interne (I), ledit fond étant délimité latéralement de part et d'autre par au moins une nervure (9) qui s'étend depuis l'interface (4).

## Description

L'invention concerne un palier à roulement comprenant un organe fixe, un organe tournant et au moins une rangée de corps roulants disposée entre lesdits organes pour permettre leur rotation relative.

En particulier, l'invention s'applique à un palier à roulement pour le montage d'une roue de véhicule automobile, l'organe fixe étant destiné à être solidarisé à un élément de suspension dudit véhicule et l'ensemble roue - disque de frein étant destiné à être monté en rotation par l'intermédiaire de l'organe tournant. Plus précisément, l'invention s'applique au montage d'une roue non motrice au moyen d'un palier dans lequel l'organe extérieur est tournant et l'organe intérieur est fixe.

Pour le montage d'une roue, on connaît des paliers à roulement dans lesquels l'organe fixe et/ou l'organe tournant présente une surface circonférentielle de révolution autour d'un axe et, s'étendant depuis ladite surface, au moins une patte de solidarisation dudit organe à une structure environnante, respectivement à l'élément de suspension pour l'organe fixe et à l'ensemble roue - disque de frein pour l'organe tournant.

En particulier, les pattes de solidarisation peuvent présenter une interface de raccordement avec la surface circonférentielle et un orifice de fixation traversant de part et d'autre ladite patte entre une ouverture externe et une ouverture interne débouchant respectivement dans un plan externe et dans un plan interne.

De par l'intégration d'une partie des fonctions de fixation des structures environnantes et des sollicitations mécaniques qui en résultent, ces paliers à roulement sont relativement massifs, ce qui pose des problèmes de poids et de coûts.

L'invention a pour but de perfectionner l'art antérieur en proposant un palier à roulement dont le compromis entre la masse et la résistance mécanique est optimisé pour l'application considérée, notamment relativement à la durée de vie, à la rigidité et à la tenue en fatigue dudit palier.

A cet effet, l'invention propose un palier à roulement comprenant un organe fixe, un organe tournant et au moins une rangée de corps roulants disposée entre lesdits organes pour permettre leur rotation relative, au moins l'un desdits organes présentant une surface circonférentielle de révolution autour d'un axe et, s'étendant depuis ladite surface, au moins une patte de solidarisation dudit organe à une structure, ladite patte présentant une interface de raccordement avec la surface circonférentielle et un orifice de fixation traversant de part et d'autre ladite patte entre une ouverture externe et une ouverture interne débouchant respectivement dans un plan externe et dans un plan interne, la patte comprenant une face interne présentant un évidement ayant un fond qui s'étend depuis l'interface vers l'orifice de fixation en présentant une zone extérieure qui est contenue dans le plan interne, ledit fond étant délimité latéralement de part et d'autre par au moins une nervure qui s'étend depuis l'interface, ladite interface présentant une dimension axiale H mesurée entre l'extrémité interne de la nervure et le plan externe, l'évidement présentant une profondeur d'allègement h mesurée axialement entre ladite extrémité interne des nervures et l'intersection entre l'interface et le plan interne.

D'autres objets et avantages de l'invention apparaîtront dans la description qui suit, faite en référence aux figures annexées, dans lesquelles :
- la figure 1 est une vue en perspective de l'organe extérieur d'un palier à roulement selon un premier mode de réalisation de l'invention ;
- les figures 2 sont des représentations de l'organe extérieur de la figure 1, respectivement de face (figure 2), en coupe longitudinale AA de la figure 2 (figure 2a) et en coupe brisée BB de la figure 2 (figure 2b) ;
- la figure 3 est une vue en perspective de l'organe extérieur d'un palier à roulement selon un deuxième mode de réalisation de l'invention ;
- les figures 4 sont des représentations de l'organe extérieur de la figure 3, respectivement de face (figure 4), en coupe longitudinale AA de la figure 4 (figure 4a) et en coupe brisée BB de la figure 4 (figure 4b), la figure 4c représentant une variante de réalisation pour les pattes de fixation représentées sur la figure 4.

En relation avec ces figures, on décrit ci-dessous deux modes de réalisation d'un palier à roulement comprenant un organe fixe, un organe tournant et au moins une rangée de corps roulants disposée entre lesdits organes pour permettre leur rotation relative.

Au moins l'un des organes présente une surface circonférentielle 1 de révolution autour d'un axe 2 et, s'étendant depuis ladite surface, au moins une patte 3 de solidarisation dudit organe à une structure. En particulier, l'axe 2 peut correspondre à l'axe de rotation du palier et la surface circonférentielle 1 peut présenter une surface cylindrique de révolution autour de cet axe, ladite surface s'étendant sur l'extérieur de l'organe extérieur. Dans la description, les termes « extérieur » et « intérieur » sont définis par rapport à l'axe 2 de rotation du palier, respectivement pour une localisation éloignée et proche dudit axe.

Dans les modes de réalisation représentés, le palier est destiné au montage d'une roue de véhicule automobile, plus précisément d'une roue non motrice d'un tel véhicule. Pour ce faire, l'organe extérieur est tournant, l'organe intérieur comprend deux bagues fixes (non représentées) et deux rangées de billes (non représentées) sont disposées respectivement entre une bague et l'organe extérieur. Toutefois, l'invention n'est pas limitée à une telle application et peut s'appliquer à un montage dans lequel l'organe intérieur est tournant et l'organe extérieur est fixe.

Les figures représentent un organe extérieur qui permet la solidarisation en rotation de l'ensemble roue - disque de frein audit organe, l'organe intérieur pouvant présenter toute configuration connue, notamment en intégrant ou non des moyens de solidarisation dudit organe à un élément de suspension du véhicule. En particulier, la description de l'organe extérieur faite ci-dessous peut s'appliquer par analogie à l'organe intérieur dans le cas où celui-ci est pourvu de pattes 3 de solidarisation à l'élément de suspension.

Pour permettre la solidarisation de l'ensemble roue - disque de frein, l'organe extérieur est pourvu de plusieurs pattes 3 de fixation, notamment entre trois et six pattes, qui sont équiréparties sur la surface circonférentielle 1. Les figures montrent un organe extérieur qui intègre cinq pattes 3 de solidarisation, chacune desdites pattes présentant une interface 4 de raccordement avec la surface circonférentielle 1, à savoir la portion de ladite surface sur laquelle la patte 3 est disposée.

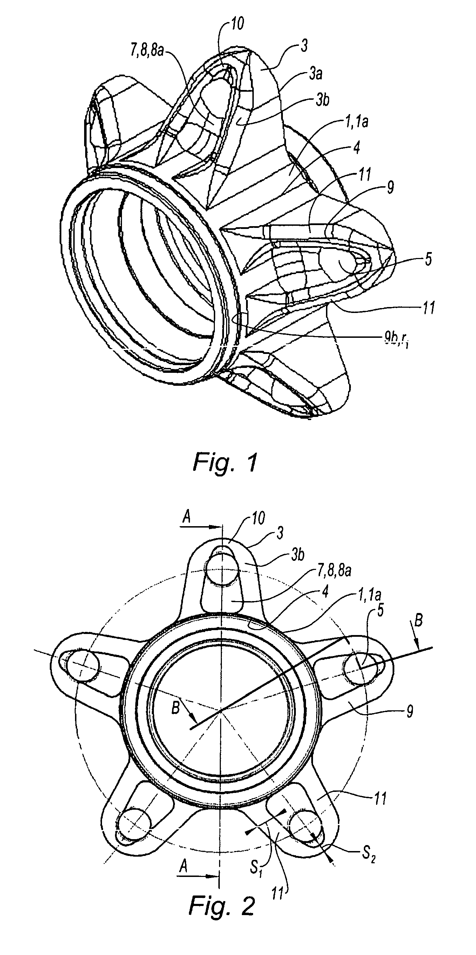

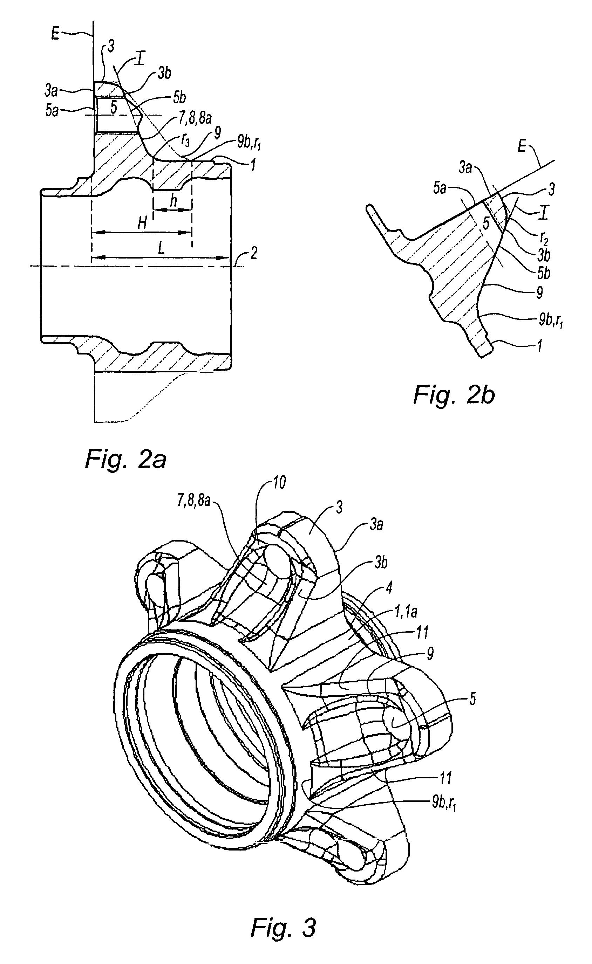

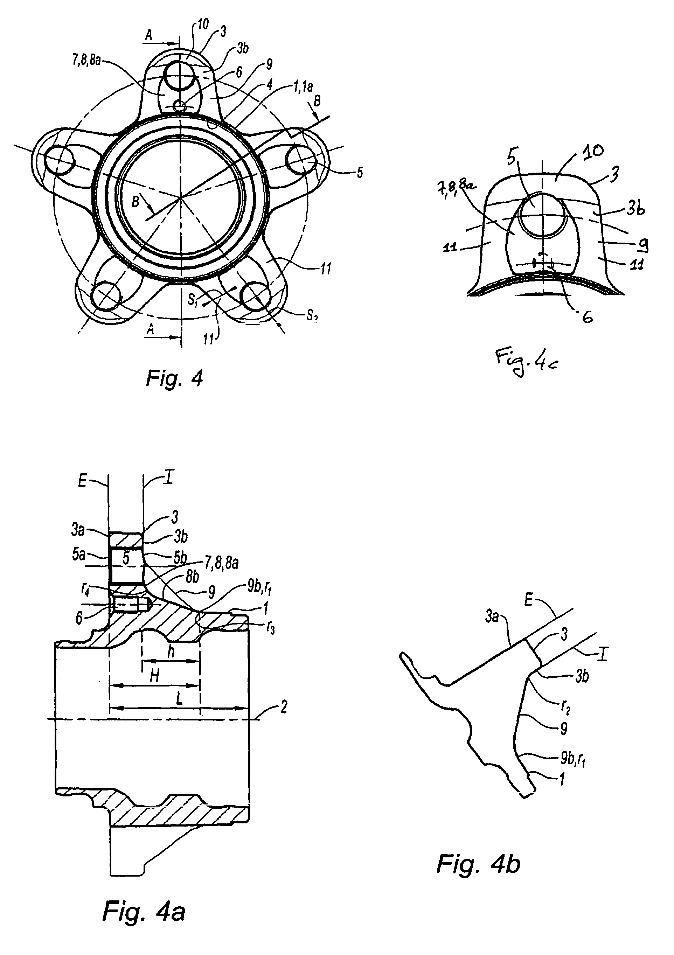

Pour permettre la fixation par vissage de l'ensemble roue - disque de frein, chaque patte 3 présente un orifice 5 qui la traverse de part et d'autre entre une ouverture externe 5a et une ouverture interne 5b qui débouchent respectivement dans un pian externe E et dans un plan interne I. Dans la description, les termes « externe » et « interne » sont définis par rapport au montage du palier sur le véhicule, respectivement à gauche des figures 2a et 4a pour l'ensemble roue - disque de frein et à droite de ces figures pour l'élément de suspension.

Dans les modes de réalisation représentés, les orifices 5 de fixation sont disposés au voisinage de l'extrémité extérieure libre des pattes 3 de fixation, c'est-à-dire à l'opposé de l'interface 4 de raccordement, lesdites pattes ainsi que lesdits orifices étant inscrits respectivement dans un diamètre. Par ailleurs, dans l'application considérée, le plan externe E s'étend radialement afin que la face externe 3a des pattes 3 forme une surface d'appui pour l'ensemble roue - disque de frein.

Comme représenté en relation avec le deuxième mode de réalisation, le maintien du disque de frein sur les pattes 3 est réalisé en formant un trou 6 sur la face externe 3a d'une patte 3. Sur les figures 4, le trou 6 de maintien est borgne et disposé vers l'intérieur par rapport à l'orifice 5 de fixation, ledit trou permettant le maintien en position du disque de frein préalablement à sa fixation à l'organe extérieur.

Dans les modes de réalisation représentés, les pattes 3 sont séparées circonférentiellement par une zone 1 a de surface cylindrique, c'est-à-dire que lesdites pattes sont disposées de façon discrète sur la surface extérieure de l'organe extérieur, notamment en n'étant pas reliées par un voile de matière. Par rapport à un organe extérieur pourvu d'un flasque de solidarisation qui est continu circonférentiellement, cette réalisation permet d'obtenir un gain de poids et/ou de répartir la matière du voile de liaison des pattes 3.

Les pattes 3 comprennent une face interne 3b dont la géométrie est agencée pour obtenir un bon compromis entre le gain de masse et la résistance mécanique vis-à-vis des efforts transitant par les pattes 3 lors de la rotation du palier sous charge. En particulier, on recherche un bon compromis entre le dimensionnement des pattes 3 et la masse correspondante. Les modes de réalisation représentés permettent un gain de masse de l'ordre de 20% pour l'organe extérieur par rapport à un organe pourvu d'un flasque de solidarisation.

Pour ce faire, la face interne 3b présente un évidement 7 ayant un fond 8 qui s'étend depuis l'interface 4 vers l'orifice 5 de fixation en présentant une zone extérieure 8a qui est contenue dans le plan interne I. En particulier, l'ouverture interne 5b débouche au moins partiellement dans la zone extérieure 8a du fond 8.

En outre, le fond 8 est délimité latéralement de part et d'autre par au moins une nervure 9 qui s'étend depuis l'interface 4. En particulier, la nervure 9 présente une extrémité interne 9b qui forme un rayon r₁ de raccordement avec la surface circonférentielle 1, ledit rayon pouvant être maximisé pour limiter les concentrations de contraintes locales. Ainsi, l'évidement 7 permet le gain de poids et la résistance mécanique est conférée par la nervure 9.

L'organe extérieur avec les pattes 3 peut être réalisé par forge ou par fonderie, notamment en acier à roulement, ledit organe étant ensuite repris par usinage pour former notamment les orifices 5 taraudés de fixation. Pour finaliser leur géométrie, l'évidement 7 et/ou la nervure 9 peuvent également être repris par usinage.

Un bon compromis est obtenu lorsque la dimension axiale H de l'interface 4 et la profondeur d'allègement h de l'évidement 7 sont telles que h/H ≥ 0,2, ladite dimension axiale H étant mesurée entre l'extrémité interne 9b de la nervure 9 et le plan externe E, ladite profondeur d'allègement h étant mesurée axialement entre ladite extrémité interne des nervures 9 et l'intersection entre l'interface 4 et le plan interne I. Plus précisément, le compromis est optimal lorsque la relation 0,4 ≤ h/H ≤ 0,7 est satisfaite, en particulier lorsque le rapport h/H est égal à 0,65.

Dans les modes de réalisation représentés, le fond 8 est délimité entre les branches 11 d'une nervure 9 en forme de U, la zone extérieure 8a étant disposée au voisinage de la partie coudée 10 dudit U. Plus précisément, la nervure 9 s'étend depuis le plan interne I par l'intermédiaire de la partie coudée 10 en présentant un rayon r₂ de raccordement, les branches 11 du U présentant une pente jusqu'à leur extrémité interne 9b qui sont décalées intérieurement par rapport audit plan interne. Par conséquent, la nervure 9 présente une dimension axiale qui est croissante en direction de l'interface 4, la dimension axiale de la partie coudée 10 pouvant être faible ou nulle dans le plan interne I.

Dans le premier mode de réalisation, la partie coudée 10 est disposée extérieurement par rapport à l'ouverture interne 5b et, dans le deuxième mode de réalisation, ladite partie coudée est partiellement traversée par l'ouverture interne 5b. En outre, dans le premier mode de réalisation, une partie du filetage de l'orifice 5 de fixation est formée sur la nervure 9.

Pour assurer une meilleure résistance mécanique, on peut prévoir que la largeur S₁ des branches 11 du U soit importante. En outre, la largeur S₂ de la partie coudée 10 du U peut être suffisante pour éviter les concentrations de contraintes sous charge en bout de patte 3 et permette une surface d'appui suffisante pour la fixation de l'ensemble roue - disque de frein. En particulier, on peut prévoir que la largeur S₂ soit inférieure à la largeur S₁ (figure 2).

La largeur S₁ peut être variable, notamment décroissante depuis l'intérieur vers l'extérieur et/ou pour améliorer l'intégration de l'ouverture interne 5b entre les branches 11. En particulier, la figure 4 montre un écartement du U afin d'éviter qu'une partie du filetage de l'orifice 5 soit formée sur la nervure 9. Par ailleurs, dans la variante de la figure 4c, la partie coudée 10 des pattes 3 est aplatie de sorte à augmenter la surface externe 3a d'appui pour l'ensemble roue - disque de frein et augmenter ainsi sa stabilité. En particulier, sur la figure 4c, la surface externe 3a est augmentée d'environ 15% par rapport à la surface externe 3a représentée sur la figure 4.

Un bon compromis entre poids et tenue mécanique est également obtenu en jouant sur la dimension axiale de l'interface 4 par rapport à celle de la surface circonférentielle 1. En particulier, la surface circonférentielle 1 présente une dimension axiale L mesurée entre l'extrémité interne de ladite surface et le plan externe E, la dimension axiale H de l'interface 4 peut être telle que 0,5 ≤ H/L ≤ 1. Plus précisément, le compromis est optimal lorsque la relation 0,55 ≤ H/L ≤ 0,8 est satisfaite.

Dans les modes de réalisation représentés, le fond 8 forme un rayon de raccordement r₃ avec la surface circonférentielle 1, ledit rayon étant formé entre les deux extrémités internes 9b des branches 11.

Dans le premier mode de réalisation (figure 1 et 2), la zone extérieure 8a s'étend depuis l'interface 4 en formant le rayon de raccordement r₃. Par ailleurs, la zone extérieure 8a et donc le plan interne I sont inclinés, notamment d'un angle compris entre 20° et 40°, par rapport à un plan radial du palier. Cette réalisation permet de bénéficier d'une patte 3 dont la dimension axiale est croissante depuis l'extrémité extérieure vers l'interface, afin de renforcer l'interface 4 qui est très sollicitée mécaniquement sans impacter de façon trop importante le poids.

Dans cette réalisation, l'inclinaison de la zone extérieure 8a est inférieure à celle des branches 11 de sorte que le rayon de raccordement r₃ entre le fond 8 et la surface circonférentielle 1 est décalé intérieurement par rapport aux extrémités internes 9b des branches 11.

Dans le deuxième mode de réalisation (figures 3 et 4), le fond 8 présente une zone intérieure 8b qui s'étend depuis l'interface 4 en formant le rayon de raccordement r₃. La zone supérieure 8a est raccordée à la zone intérieure 8b par l'intermédiaire d'un deuxième rayon de raccordement r₄.

Dans cette réalisation, la zone extérieure 8a s'étend radialement et la zone intérieure 8b est inclinée pour réaiiser la jonction avec la surface circonférentielle 1, ladite inclinaison étant supérieure à celle des branches 11 de sorte que le rayon de raccordement r₃ entre le fond 8 et la surface circonférentielle 1 soit disposé sensiblement dans le même plan radial que les extrémités internes 9b des branches 11.

## Revendications

1. Palier à roulement comprenant un organe fixe, un organe tournant et au moins une rangée de corps roulants disposée entre lesdits organes pour permettre leur rotation relative, au moins l'un desdits organes présentant une surface circonférentielle (1) de révolution autour d'un axe (2) et, s'étendant depuis ladite surface, au moins une patte (3) de solidarisation dudit organe à une structure, ladite patte présentant une interface (4) de raccordement avec la surface circonférentielle (1) et un orifice (5) de fixation traversant de part et d'autre ladite patte entre une ouverture externe (5a) et une ouverture interne (5b) débouchant respectivement dans un plan externe (E) et dans un plan interne (I), ledit paner étant **caractérisé en ce que** la patte (3) comprend une face interne (3b) présentant un évidement (7) ayant un fond (8) qui s'étend depuis l'interface (4) vers l'orifice (5) de fixation en présentant une zone extérieure (8a) qui est contenue dans le plan interne (I), ledit fond étant délimité latéralement de part et d'autre par au moins une nervure (9) qui s'étend depuis l'interface (4), ladite interface présentant une dimension axiale H mesurée entre l'extrémité interne (9b) de la nervure (9) et le plan externe (E), l'évidement (7) présentant une profondeur d'allègement h mesurée axialement entre ladite extrémité interne des nervures (9) et l'intersection entre l'interface (4) et le plan interne (I).

2. Palier à roulement selon la revendication 1, **caractérisé en ce que** la dimension axiale H de l'interface (4) et la profondeur d'allègement h de l'évidement (7) sont telles que h/H ≥ 0,2.

3. Palier à roulement selon la revendication 2, **caractérisé en ce que** la dimension axiale H de l'interface (4) et la profondeur d'allègement h sont telles que 0,4 ≤ h/H ≤ 0,7.

4. Palier à roulement selon l'une quelconque des revendications 1 à 3, **caractérisé en ce que** la surface circonférentielle (1) présente une dimension axiale L mesurée entre l'extrémité interne de ladite surface et le plan externe (E), la dimension axiale H de l'interface (4) étant telle que 0,5 ≤ H/L ≤ 1.

5. Palier à roulement selon la revendication 4, **caractérisé en ce que** la dimension axiale H de l'interface (4) est telle 0,55 ≤ H/L ≤ 0,8.

6. Palier à roulement selon l'une quelconque des revendications 1 à 5, **caractérisé en ce que** le fond (8) forme un rayon de raccordement (r₃) avec la surface circonférentielle (1).

7. Palier à roulement selon la revendication 6, **caractérisé en ce que** la zone extérieure (8a) s'étend depuis l'interface (4) en formant le rayon de raccordement (r₃).

8. Palier à roulement selon la revendication 6, **caractérisé en ce que** le fond (8) présente une zone intérieure (8b) qui s'étend depuis l'interface (4) en formant le rayon de raccordement (r₃), la zone supérieure (8a) étant raccordé à ladite zone intérieure par l'intermédiaire d'un deuxième rayon de raccordement (r₄).

9. Palier à roulement selon l'une quelconque des revendications 1 à 8, **caractérisé en ce que** le plan interne (I) est incliné par rapport à un plan radial du palier.

10. Palier à roulement selon l'une quelconque des revendications 1 à 9, **caractérisé en ce que** l'extrémité interne (9b) de la nervure (9) forme un rayon de raccordement (r₁) avec la surface circonférentielle (1).

11. Palier à roulement selon l'une quelconque des revendications 1 à 10, **caractérisé en ce que** le fond (8) est délimité entre les branches (11) d'une nervure (9) en forme de U, la zone extérieure (8a) étant disposée au voisinage de la partie coudée (10) dudit U.

12. Palier à roulement selon la revendication 11, **caractérisé en ce que** la partie coudée (10) du U présente une largeur S₂ qui est inférieure à la largeur S₁ des branches (11) dudit U.

13. Palier à roulement selon l'une quelconque des revendications 1 à 12, **caractérisé en ce que** l'ouverture interne (5b) débouche au moins partiellement dans la zone extérieure (8a) du fond (8).

14. Palier à roulement selon l'une quelconque des revendications 1 à 13, **caractérisé en ce que** la surface circonférentielle (1) présente une géométrie cylindrique sur laquelle plusieurs pattes (3) sont équiréparties, lesdites pattes étant séparées circonférentiellement par une zone de surface cylindrique (1 a).

15. Palier à roulement selon l'une quelconque des revendications 1 à 14, **caractérisé en ce que** la patte (3) comprend une face externe (3a) dans laquelle un trou (6) de maintien est formé.
